Europäisches Patentamt

European Patent Office

Office européen des brevets

(11) Veröffentlichungsnummer: **0 047 502**
**B1**

(12) **EUROPÄISCHE PATENTSCHRIFT**

(45) Veröffentlichungstag der Patentschrift:
13.02.85

(21) Anmeldenummer: **81106919.4**

(22) Anmeldetag: **03.09.81**

(51) Int. Cl.⁴: **A 01 D 34/74**

(54) **Schnitthöheneinstellvorrichtung für Rasenmäher.**

(30) Priorität: **04.09.80 DE 8023615 U**

(43) Veröffentlichungstag der Anmeldung:
**17.03.82 Patentblatt 82/11**

(45) Bekanntmachung des Hinweises auf die Patenterteilung:
**13.02.85 Patentblatt 85/7**

(84) Benannte Vertragsstaaten:
**AT BE CH DE FR IT LI NL SE**

(56) Entgegenhaltungen:
**DE - B - 2 419 364**
**DE - U - 6 921 806**
**DE - U - 7 818 721**
**GB - A - 878 834**

(73) Patentinhaber: **Wolf-Geräte GmbH, Gregor-Wolf-Strasse Postfach 860 und 880, D-5240 Betzdorf/Sieg (DE)**

(72) Erfinder: **Kolb, Walter, Martin-Luther-Strasse 51, D-5240 Betzdorf/Sieg (DE)**
Erfinder: **Kalleicher, Artur, Höferwald 8, D-5242 Kirchen/Sieg (DE)**

(74) Vertreter: **Koch, Günther, Dipl.-Ing. et al, Kaufingerstrasse 8, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine Schnitthöheneinstellvorrichtung für Rasenmäher mit gegenüber dem Chassis höhenverstellbaren und in unterschiedlichen Höhenlagen verriegelbaren Radträgern und mit einem von der Mäheroberseite aus betätigbaren, selbsttätig in die Verriegelungsstellung zurückkehrenden Entriegelungskopf für die Radträger. Eine solche Schnitthöheneinstellvorrichtung ist aus der DE-B-2 419 364 bekannt. Diese Einstellvorrichtung hat gegenüber zahlreichen anderen Höheneinstellvorrichtungen den Vorteil, daß der Entriegelungsknopf an einer Stelle angeordnet werden kann, an der er bequem und unbehindert durch andere Bauteile frei zugänglich ist, ohne daß an den Radträgern befestigte Hebelgestänge betätigt werden müßten.

Bei der bekannten Höheneinstellvorrichtung werden durch Knopfdruck jeweils die beiden Träger der Vorderräder bzw. Hinterräder entriegelt und die Höhenjustierung in entriegelter Stellung geschieht dadurch, daß um die Räder der nicht entriegelten Radträger eine Schwenkung unter Zuhilfenahme des Führungsgriffes erfolgt. Eine die Höhenlage anzeigende, in einem Sichtfenster erkennbare Skala zeigt dabei in Verbindung mit einer Indexmarkierung die jeweils eingestellte Höhenlage an, so daß mit hoher Genauigkeit die gewünschte Radeinstellung vorgenommen werden kann.

Der Erfindung liegt die Aufgabe zugrunde, den Bedienungskomfort der Höheneinstellvorrichtung noch weiter zu erhöhen und ein noch feinfühligeres Einstellen der gewünschten Höhenlage zu gewährleisten.

Gelöst wird die gestellte Aufgabe durch die im Kennzeichnungsteil des Patentanspruchs 1 angegebenen Merkmale.

Durch die Erfindung wird es möglich, ohne Zuhilfenahme des weit ausladenden Bedienungsgriffes mit der gleichen Hand, die die Entriegelungstaste betätigt, den Rasenmäher soweit abzusenken oder anzuheben, wie dies für die gewünschte Höheneinstellung erforderlich ist. Diese Einstellung wird besonders einfach, wenn gemäß der Ausbildung nach Unteranspruch 3 ein an sich bekannter Gewichtsausgleich in Gestalt einer Feder vorgesehen wird und gemäß den Merkmalen des Unteranspruchs 5 die Einstellung auf die Radträger sämtlicher vier Laufräder wirkt.

Nach der Erfindung ist der Entriegelungstaster mit der benachbarten Griffmulde zweckmäßigerweise an einer erhöhten Stelle des Mäherchassis so angeordnet, daß sich die Bedienungsperson nicht zu tief zu bücken braucht.

Es sind zwar Höheneinstellvorrichtungen bekannt, bei denen alle vier Räder gleichzeitig betätigt werden und eine Ausgleichsfeder vorgesehen ist, jedoch erfolgt hierbei die Betätigung über einen Hebel, was eine umständliche Handhabung bedingt. Durch die Erfindung wird es demgegenüber möglich, durch Einhandbedienung unter Ablesen einer einzigen Skala für alle Räder gleichzeitig sehr feinfühlig und schnell die gewünschte Höhenstellung vorzunehmen.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigt

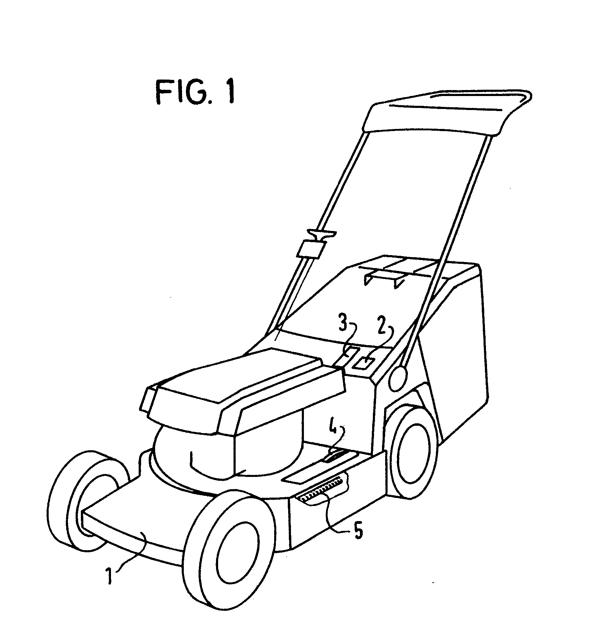

Fig. 1 eine perspektivische, teilweise aufgebrochene Ansicht eines Rasenmähers mit einer erfindungsgemäß ausgebildeten Schnitthöheneinstellvorrichtung,

Fig. 2 eine Seitenansicht der Vorderradlagerung mit Kupplungsgestänge und Gewichtsausgleichsfeder,

Fig. 2A eine Seitenansicht der Hinterradlagerung mit Kupplungsgestänge und Entriegelungsstange,

Fig. 3 einen Schnitt nach der Linie III-III gemäß Fig. 2A,

Fig. 4 eine Draufsicht zu Fig. 2 und

Fig. 5 eine Draufsicht zu Fig. 2A.

Am Mäherchassis 1 ist im hinteren Bereich oben ein großer Entriegelungstastknopf 2 angebracht, neben dem im Chassis ein als Griffmulde 3 ausgebildeter Handgriff vorgesehen ist. Soll die Höhe verstellt werden, greift die Bedienungsperson mit vier Fingern der rechten Hand in diese Griffmulde 3, hält damit den Rasenmäher und kann mit dem Daumen gleichzeitig den Entriegelungsknopf 2 betätigen. Durch den Knopfdruck wird die Verriegelung der Höheneinstellvorrichtung gelöst, und der Mäher kann in die gewünschte Schnitthöhe mit der einen Hand angehoben oder abgelassen werden, die mit dem Daumen den Entriegelungsknopf 2 betätigt.

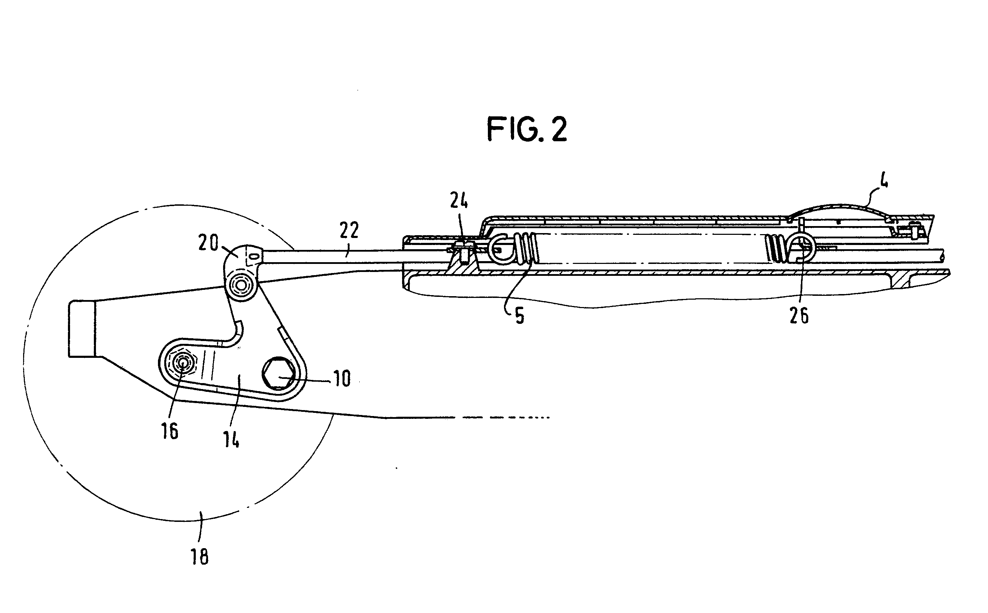

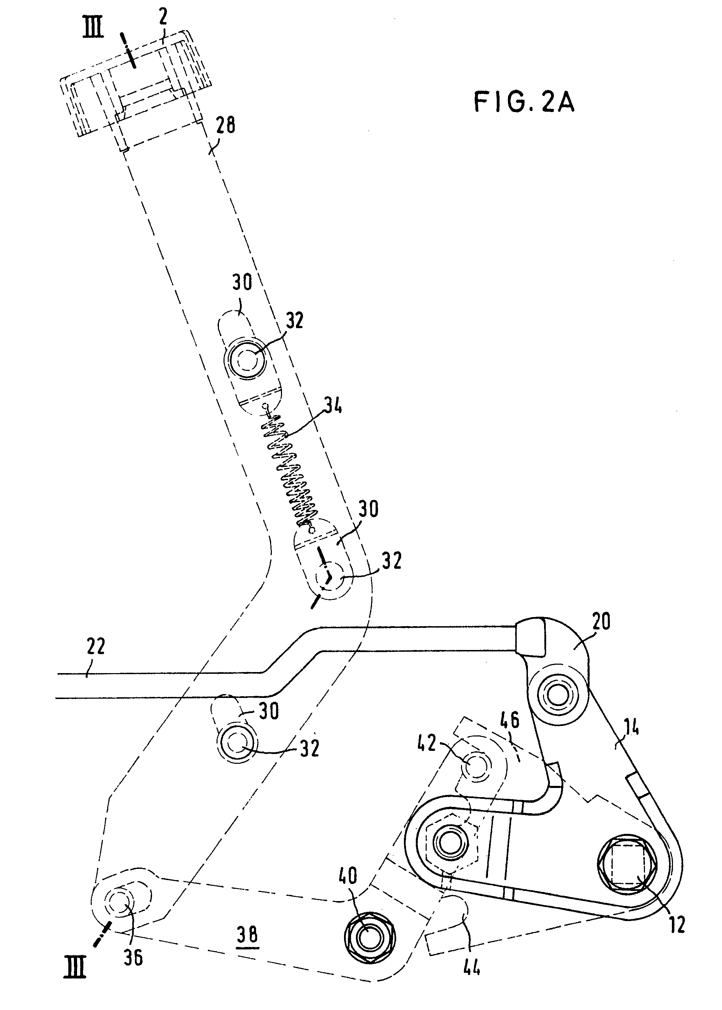

Das Mähergewicht wird durch eine Ausgleichsfeder 5 in Gestalt einer Schraubenfeder kompensiert, die innerhalb des Chassis in Längsrichtung ausgespannt ist und zwischen den bewegungsschlüssig gekuppelten Radträgern und dem Chassis wirksam wird. Es müssen daher durch die in die Griffmulde eingreifende Hand nur die geringen Kräfte der Federvorspannung ausgeglichen werden. Die Anzeige der Höheneinstellung erfolgt in einem Sichtfenster 4, durch das eine Skala oder ein Zeiger sichtbar ist, die mit den beweglichen Radträgern 14 bzw. der sie verbindenden Kupplungsstange 22 (Fig. 2) bewegungsschlüssig in Verbindung stehen und die gegenüber einem Zeiger oder einer Skala ablesbar sind, die benachbart zum Fenster 4 oder in diesem vorgesehen sind.

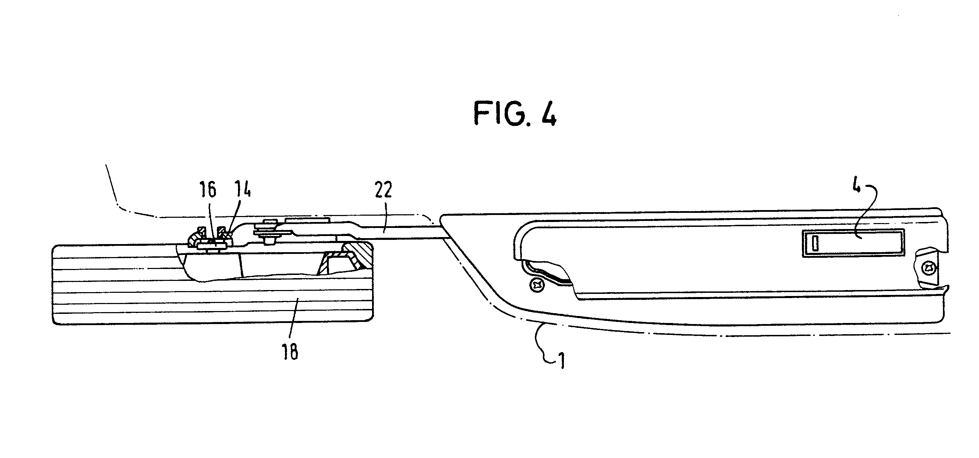

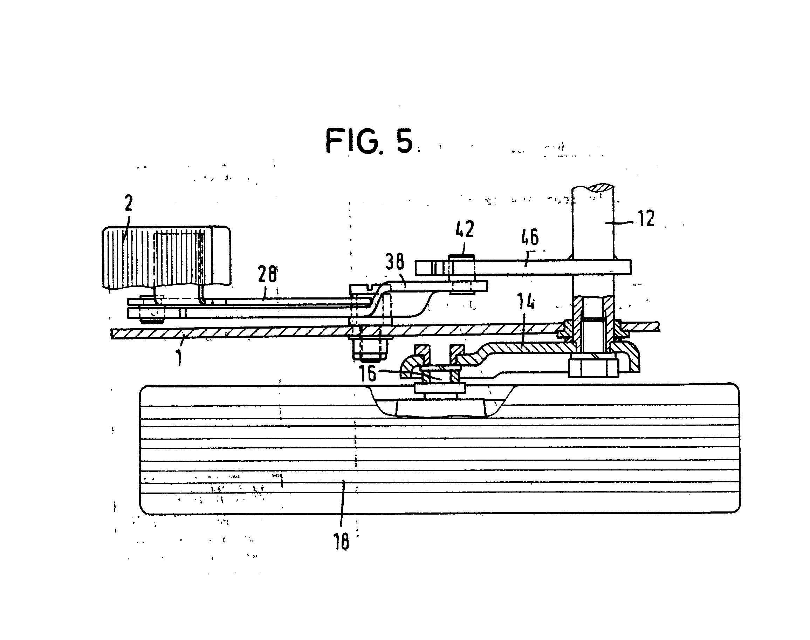

Die Höheneinstellvorrichtung, mit der gleichzeitig die Höhe des Chassis über dem Boden gleichmäßig über alle vier Räder eingestellt werden kann, ergibt sich aus den Fig. 2 bis 5. Vorn bzw. hinten ist im Chassis je eine Stellwelle 10 bzw. 12 drehbar gelagert, auf deren Enden je ein einen Radträger bildender Winkelhebel 14 drehfest aufgesetzt ist. Ein Hebelarm dieser Winkelhebel 14 trägt jeweils eine Radachse 16, auf der ein Rad 18 frei drehbar gelagert ist. Der andere Hebelarm jedes Winkelhebels 14 ist an einem Verbindungsglied 20 angelenkt. Auf beiden Seiten des Mähers sind die Verbindungsglieder 20 von Vorderradlager bzw. Hinterradlager durch eine Kupplungsstange 22 derart verbunden, daß alle vier Winkelhebel 14 gleichsinnig und gleichzeitig verstellt werden, wenn das Mäherchassis 1 nach Drücken des Entriegelungsknopfes 2 angehoben oder abgesenkt wird.

Die Gewichtsausgleichsfeder 5 ist zwischen einem Lageransatz 24 des Chassis und einem Verankerungsglied 26 der Kupplungsstange 22 ausgespannt. Diese Feder 5 nimmt das Gewicht des Mähers auf und hält das Chassis nach Drücken des Entriegelungsknopfes 2 in einer Mittelstellung. Wird aus dieser Mittelstellung das Chassis 1 angehoben, dann drehen sich alle Winkelhebel gemäß Fig. 2 und 2A im Gegenuhrzeigersinn um die Achse der Stellwelle 10, so daß der Bodenabstand vergrößert wird. Umgekehrt drehen sich sämtliche Winkelhebel 14 im Uhrzeigersinn, wenn das Chassis auf den Boden hin gedrückt wird, wobei die Ausgleichsfeder 5 weiter gespannt wird. Auf diese Weise kann das Chassis mit geringer Kraft an der Griffmulde 3 angehoben bzw. abgesenkt werden, weil das Gewicht des Mähers von der Ausgleichsfeder 5 aufgenommen wird.

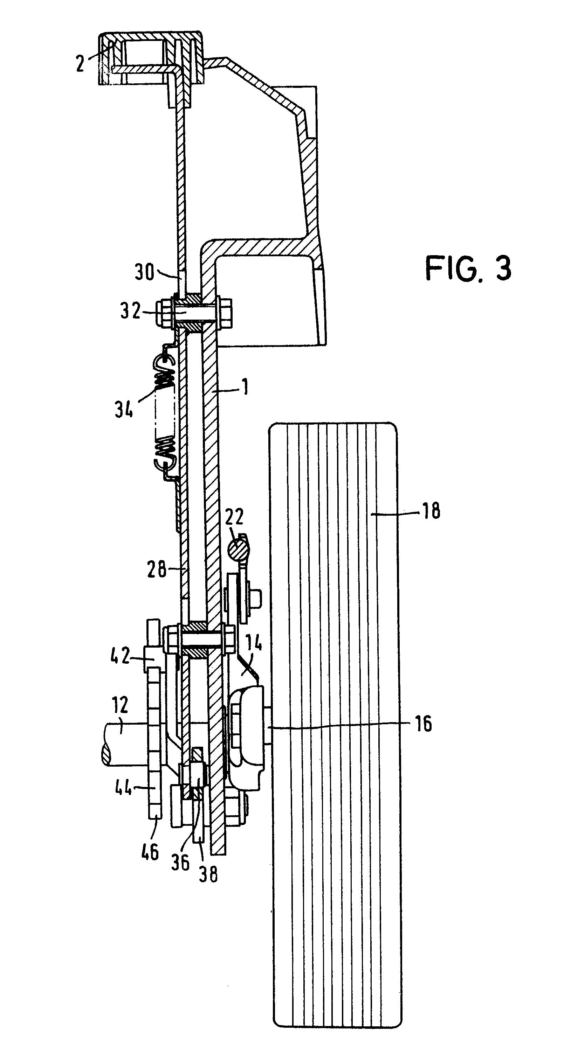

Die Verriegelung bzw. Entriegelung durch den Entriegelungsknopf 2 ist am besten aus Fig. 2A und 3 erkennbar und wird im folgenden beschrieben:

Der Entriegelungsknopf 2 sitzt am Ende einer abgewinkelten Entriegelungsstange 28, die parallel zueinander verlaufende Langlochschlitze 30 aufweist, in die am Chassis befestigte Führungszapfen 32 einstehen, die die Entriegelungsstange 28 geradlinig führen. Eine zwischen Chassis 1 und Entriegelungsstange 28 ausgespannte Zugschraubenfeder 34 führt die Entriegelungsstange 28 und den Entriegelungsknopf 2 nach Loslassen in die Ausgangsstellung zurück.

Am unteren Ende der Entriegelungsstange 28 ist über einen Zapfen 36 das eine Ende eines Winkelhebels 38 angelenkt, der um eine chassisfeste Achse 40 schwenkbar ist und eine Verriegelungsrolle 42 an seinem anderen Ende trägt. Diese Rolle 42 wird durch die Feder 34 in jeweils eine von mehreren Rastausnehmungen 44 eingezogen, die auf dem Kreisbogenabschnitt eines Rastsegmentes 46 angeordnet sind, das drehfest auf die hintere Stellwelle 12 aufgesetzt ist. Wenn der Entriegelungsknopf 2 eingedrückt wird, dann verschiebt sich die Stange 28 in ihren Langlochführungen 30, 32, wodurch der Winkelhebel 38 gemäß Fig. 2A im Gegenuhrzeigersinn verschwenkt wird, so daß die Verriegelungsrolle 42 ausgehoben wird. Nunmehr kann der Mäher durch Erfassen der Griffmulde 3 oder an anderer Stelle angehoben oder abgesenkt werden, und beim Loslassen des Entriegelungsknopfes 2 wird eine Rastverriegelung in der gewünschten Höhenlage gewährleistet. Die jeweilige Höhenstellung ist durch das Fenster 4 ersichtlich.

## Patentansprüche

1. Schnitthöheneinstellvorrichtung für Rasenmäher mit gegenüber dem Chassis (1) höhenverstellbaren und in unterschiedlichen Höhenlagen verriegelbaren Radträgern (14) und mit einem von der Mäheroberseite aus betätigbaren, selbsttätig in die Verriegelungsstellung zurückkehrenden Entriegelungsknopf (2) für die Radträger (14), dadurch gekennzeichnet, daß benachbart zum Entriegelungsknopf (2) im Chassis (1) ein Handgriff (3) vorgesehen ist, der derart benachbart zum Entriegelungsknopf (2) angeordnet ist, daß letzterer mit dem Daumen betätigbar ist, während die übrigen Finger der Hand den Handgriff (3) erfassen.

2. Schnitthöheneinstellvorrichtung nach Anspruch 1, dadurch gekennzeichnet, daß der Handgriff als Griffmulde (3) ausgebildet ist.

3. Schnitthöheneinstellvorrichtung nach Anspruch 1, dadurch gekennzeichnet, daß als Gewichtsausgleich eine Feder (5) vorgesehen ist, die zwischen dem Mäherchassis (1) und den Radträgern (14) wirksam ist.

4. Schnitthöheneinstellvorrichtung nach Anspruch 3, dadurch gekennzeichnet, daß die Gewichtsausgleichsfeder als Schraubenfeder (5) ausgebildet ist, die in Längsrichtung des Chassis (1) unter diesem angeordnet ist.

5. Schnitthöheneinstellvorrichtung nach den Ansprüchen 1 bis 4, dadurch gekennzeichnet, daß die Radträger (14) der vier Räder über ein Gestänge (22) gekuppelt sind.

6. Schnitthöheneinstellvorrichtung nach den Ansprüchen 1 bis 5, dadurch gekennzeichnet, daß das Mäherchassis (1) ein Sichtfenster (4) aufweist, in welchem eine mit den Radträgern (14) bewegungsschlüssig verbundene Skala sichtbar ist, und daß am Rande des Fensters (4) ein Zeiger angeordnet ist.

7. Schnitthöheneinstellvorrichtung nach Anspruch 1, dadurch gekennzeichnet, daß der Entriegelungsknopf (2) und die Griffmulde (3) an einem erhöhten Abschnitt des Chassis (1) im hinteren Bereich angeordnet ist, an dem die Griffholme ansetzen.

8. Schnitthöheneinstellvorrichtung nach einem der Ansprüche 1 bis 7, dadurch gekennzeichnet, daß die Radträger als Winkelhebel (14) ausgebildet sind, die paarweise auf je einer im Chassis (1) drehbar gelagerten Stellwelle (10, 12) sitzen, und von denen jeweils ein vorderer und ein hinterer Winkelhebel (14) über eine Kupplungsstange (22) verbunden sind.

9. Schnitthöheneinstellvorrichtung nach den Ansprüchen 3 bis 5 und 8, dadurch gekennzeichnet, daß die Gewichtsausgleichsfeder (5) zwischen einem Lageransatz (24) des Chassis (1) und einem Verankerungsglied (26) der Kupplungsstange (22) verankert ist.

10. Schnitthöheneinstellvorrichtung nach einem der Ansprüche 1 bis 9, dadurch gekennzeichnet, daß der Entriegelungsknopf (2) auf einer verschiebbaren Entriegelungsstange (28) sitzt, die Verrastungselemente (42, 44) in Eingriff bzw. außer Eingriff bringt.

11. Schnitthöheneinstellvorrichtung nach den Ansprüchen 8 und 10, dadurch gekennzeichnet, daß die Stange (28) an einem an Chassis schwenkbar (40) verankerten Winkelhebel (38) angelenkt ist, der eine Verriegelungsrolle (42) trägt, die mit Rastausnehmungen (44) eines Rastsegmentes (46) zusammenwirkt, welches auf der hinteren Stellwelle (12) drehfest aufgesetzt ist.

## Claims

1. A cutting height adjustment device for lawnmowers having wheel carriers (14) which can be vertically adjusted relative to the chassis (1) and locked in different vertical positions, and a release knob (2) for the wheel carriers (14) which can be actuated from the upper side of the mower and which automatically returns into the locked position, characterised in that a handgrip (3) is provided in the chassis adjacent to the release knob (2), with the handgrip (3) being arranged adjacent the release knob (2) in such a way that the latter can be actuated with the thumb while the remaining fingers of the hand engage the handgrip (3).

2. A cutting height adjustment device in accordance with claim 1, characterised in that the handgrip is constructed as a recessed grip (3).

3. A cutting height adjustment device in accordance with claim 1, characterised in that a spring (5) which acts between the mower chassis (1) and the wheel carriers (14) is provided for weight compensation.

4. A cutting height adjustment device in accordance with claim 3, characterised in that the weight compensation spring is constructed as a coil spring (5) which is arranged in the longitudinal direction of the chassis (1) beneath the latter.

5. A cutting height adjustment device in accordance with the claims 1 to 4, characterised in that the wheel carriers (14) for the four wheels are coupled via a linkage (22).

6. A cutting height adjustment device in accordance with the claims 1 to 5, characterised in that the mower chassis (1) has a viewing window (4) in which a scale connected for movement with the wheel carriers (14) is visible; and in that a pointer is arranged at the edge of the window (4).

7. A cutting height adjustment device in accordance with claim 1, characterised in that the release knob (2) and the recessed grip (3) are arranged at an elevated portion of the chassis (1) in the rear region to which the shafts of the handle are attached.

8. A cutting height adjustment device in accordance with one of the claims 1 to 7, characterised in that the wheel carriers are constructed as cranked levers (14) which sit pairwise on respective positioning shafts (10, 11) which are rotatably journalled in the chassis (1), and with one front cranked lever and one rear cranked lever (14) being connected together via a coupling rod (22).

9. A cutting height adjustment device in accordance with the claims 3 to 5 and 8, characterised in that the weight compensation spring (5) is anchored between a mounting projection (24) of the chassis (1) and an anchoring member (26) of the coupling rod (22).

10. A cutting height adjustment device in accordance with one of the claims 1 to 9, characterised in that the release knob (2) sits on a displaceable release rod (28) which brings the latching elements (42, 44) into and out of engagement.

11. A cutting height adjustment device in accordance with claims 8 and 10, characterised in that the rod (28) is pivotably connected to a cranked lever (38) which is pivotably anchored (40) to the chassis, with the cranked lever carrying a locking roller (42) which cooperates with latch recesses (44) of a latch segment (46) which is rotationally fixedly mounted on the rear positioning shaft (12).

## Revendications

1. Dispositif de réglage de hauteur de coupe pour tondeuses à gazon, qui comporte des supports de roues (14) pouvant être déplacés en hauteur par rapport au châssis (1) et pouvant être verrouillés dans différentes positions en hauteur, ainsi qu'un bouton de déverrouillage (2) pour les supports de roues (14), qui peut être actionné de la face supérieure de la tondeuse et qui retourne automatiquement à la position de verrouillage, le dispositif de réglage étant caractérisé en ce qu'il comport est prévu, au voisinage du bouton de déverouillage (2), dans le châssis (1), une poignée (3), qui est prévue suffisamment rapprochée du bouton de déverrouillage (2) pour que celui-ci puisse être actionné du pouce tandis que les autres doigts de la main saisissent la poignée (3).

2. Dispositif de réglage de hauteur de coupe suiv. la rev. 1, car. en ce que la poignée est prévue sous la forme d'une cavité de préhension (3).

3. Dispositif de réglage de hauteur de coupe suiv. la rev. 1, car. en ce qu'il es prévu, comme élément de compensation de poids, un ressort (5) qui peut agir entre le châssis (1) de la tondeuse et les supports de roues (14).

4. Dispositif de réglage de hauteur de coupe suiv. la rev. 3, car. en ce que le ressort de compensation de poids est prévu sous la forme d'un ressort hélicoidal (5) qui est monté dans le sens longitudinal du châssis (1), en dessous de celui-ci.

5. Dispositif de réglage de hauteur de coupe suiv. les rev. 1 à 4, car. en ce que les supports de roues (14) des quatre roues sont accouplés par une tringle (22).

6. Dispositif de réglage de hauteur de coupe suiv. les rev. 1 à 5, car. en ce que le châssis (1) de la tondeuse présente une fenêtre de regard (4) par laquelle apparaît une échelle qui est reliée aux supports de roues (14) de façon à en suivre les mouvements et en ce qu'au bord de la fenêtre (4), il est prévu une aiguille.

7. Dispositif de réglage de hauteur de coupe suiv. la rev. 1, car. en ce que le bouton de déverrouillage (2) et la cavité de préhension (3) sont prévus à une partie surélévée du châssis (1), dans la zone postérieure de celui-ci, à laquelle sont fixés les bras d'actionnement.

8. Dispositif de réglage de hauteur de coupe suiv. l'une quelconque des rev. 1 à 7, car. en ce que les supports de roues sont prévus sous la forme de leviers coudés (14) qui prennent appui par paires sur deux arbres de réglage (10, 12) montés de façon à pouvoir tourner dans la châssis (1) et dont ceux qui sont prévus à l'avant sont reliés à ceux (14) qui sont prévus à l'arrière par une tringle d'accouplement (22).

9. Dispositif de réglage de hauteur de coupe suiv. les rev. 3 à 5 et 8, car. en ce que le ressort de compensation de poids (5) est fixé entre une saillie de support (24) que présente le châssis (1) et un élément de fixation (26) de la tringle d'accouplement (22).

10. Dispositif de réglage de hauteur de coupe suiv. l'une quelc. des rev. 1 à 9, car. en ce que le bouton de déverrouillage (2) prend appui sur une barre de déverrouillage (28) pouvant être déplacèe, qui amène des éléments d'arrêt (42, 44) en engagement et hors d'engagement.

11. Dispositif de réglage de hauteur de coupe suiv. les rev. 8 et 10, car. en ce que la barre (28) est articulée à un levier coudé (38) qui est fixé au châssis de façon à pouvoir pivoter en (40), levier coudé portant un rouleau de verrouillage (42) qui coopère avec des crans d'arrêt (44) d'un segment d'arrêt (46) monté sur l'arbre de réglage postérieur (12) de façon à être solidaire de celui-ci en rotation.

# FIG. 1

FIG. 2

# FIG. 2A

FIG. 3

FIG. 4

0 047 502

FIG. 5